# EUROPÄISCHE PATENTSCHRIFT

(11) **EP 1 596 262 B1**
(45) Veröffentlichungstag und Bekanntmachung des Hinweises auf die Patenterteilung: **11.04.2007**
(21) Anmeldenummer: 04011105.6
(22) Anmeldetag: 10.05.2004
(51) Int. Cl.: G05B 19/042

(54) **Sicherheitsgerichtete Übertragung von Daten**
Safety-oriented data transfer
Transfert de données orienté sûreté

(43) Veröffentlichungstag der Anmeldung: 16.11.2005
(73) Patentinhaber: SIEMENS AKTIENGESELLSCHAFT, 80333 München (DE)
(72) Erfinder: Barthel, Herbert, 91074 Herzogenaurach (DE); Schiller, Frank, Dr., 90408 Nürnberg (DE); Sigwart, Edgar, 92224 Amberg (DE)

(56) Entgegenhaltungen:
- EP-A- 1 043 640
- WO-A-00/38021
- DE-A- 10 219 501

## Beschreibung

Die Erfindung betrifft ein System sowie ein Verfahren zur sicherheitsgerichteten Übertragung von Daten, wobei das System mindestens eine Komponente aufweist, welche zur sicherheitsgerichteten Übertragung von Daten ertüchtigt ist.

Zur sicherheitsgerichteten Übertragung von Daten über sicherheitsgerichtete Busknoten werden Peripheriegeräte mit zwei Mikrocontrollern eingesetzt. Solche sicheren Peripheriegeräte erreichen üblicherweise einen Sicherheitslevel SIL 2 bis SIL 3 nach IEC 61508. In der Prozessindustrie werden für Sicherheitsanwendungen dagegen häufig betriebsbewährte Geräte ohne Busanschluss eingesetzt.

Der Begriff "sicherheitsgerichtet" (Englisch: failsafe) bezeichnet gemäß DIN V VDE 0801 bzw. VDI/VDE 3542 die Fähigkeit eines Systems, beim Auftreten eines Ausfalls im sicheren Zustand zu bleiben oder unmittelbar in einen sicheren Zustand überzugehen. Synonym werden auch die Begriffe "fehlersicher" oder "sicher" verwendet.

Aus der EP 1 043 640 A2 ist ein fehlersicheres Automatisierunksystem mit Standard CPUs und Standard Peripheriebaugruppen bekannt, bei dem ein oder mehrere Kommunikationskanäle zwischen den CPUs und den Peripheriebaugruppen vorgesehen sind.

Aus der WO 00/38021 A1 ist ein fehlersicheres skalierbares System bekannt, wobei die Skalierbarkeit durch die Projektierung des Systems erreicht wird.

Aus der DE 102 19 501 A1 ist ein Verfahren zur Verbesserung von Fehlerbeherrschungsmaßnahmen in einem Automatisierungssystem bestehend aus einer Standard-CPU, einer Peripheriebaugruppe und einem Kommunikationssystem bekannt, bei dem die Überprüfung auf Fehler innerhalb der CPU auf Basis einer Kombination diversitärer und codierter Verarbeitung von Daten erfolgt.

Der Erfindung liegt die Aufgabe zugrunde, die sicherheitsgerichtete Übertragung von Daten mit reduziertem Hardwareaufwand zu ermöglichen.

Diese Aufgabe wird durch ein System zur sicherheitsgerichteten Übertragung von Daten gelöst, mit mindestens einer einkanaligen Komponente, welche zur sicherheitsgerichteten Übertragung von Daten dadurch ertüchtigt ist, dass sie über einen Bus an eine sicherheitsgerichtete Rechnereinheit angeschlossen ist, sie einen Kommunikations-Treiber aufwe ist, welcher die Daten in normaler und in diversitärer Form führt, der Kommunikations-Treiber einen Markierungswert, welcher anzeigt, ob sichere Ersatzwerte oder Realwerte benutzt werden, in normaler und in diversitärer Form führt, im Kommunikations-Treiber eine Prüfsumme aus den in diversitärer Form geführten Daten generiert wird und dass eine Programmlaufkontrolle zur Überwachung des Programmablaufs vorgesehen ist.

Diese Aufgabe wird durch ein Verfahren zur sicherheitsgerichteten Übertragung von Daten gelöst, bei welchem mit mindestens einer einkanaligen Komponente Daten sicherheitsgerichtet übertragen werden, wobei die Komponente über einen Bus an eine sicherheitsgerichtete Rechnereinheit angeschlossen wird, wobei ein Kommunikations-Treiber der Komponente die Daten in normaler und in diversitärer Form führt, wobei der Kommunikations-Treiber einen Markierungswert, welcher anzeigt, ob sichere Ersatzwerte oder Realwerte benutzt werden, in normaler und in diversitärer Form führt, wobei im Kommunikations-Treiber eine Prüfsumme aus den in diversitärer Form geführten Daten generiert wird und wobei der Programmablauf durch eine Programmlaufkontrolle überwacht wird.

Gemäß der Erfindung ist es möglich, auf Basis einer einkanaligen Komponente, insbesondere einem Mikrocontroller, einen Kommunikations-Treiber einzusetzen, der den Sicherheitslevel SIL 2 (nach IEC 61508) erreicht. Eine aufwändige vollständig redundante Ausführung der Hardware oder der Software der Komponente ist nicht notwendig. An den Stellen, an welchen sich bei einer redundanten Ausführung die beiden Mikrocontroller synchronisieren würden, wird erfindungsgemäß eine Programmlaufkontrolle aufgerufen, die überprüft, ob diese Synchronisationspunkte in der richtigen Reihenfolge abgearbeitet werden. Zusätzlich werden die Daten sowie der Markierungswert doppelt, d.h. parallel in normaler und in diversitärer Form - insbesondere in nichtinvertierter und in invertierter Form - geführt. Weitere Fehler werden durch die sicherheitsgerichtete Rechnereinheit erkannt.

Insbesondere in der Prozessindustrie wird aus Kostengründen vermieden, Komponenten aufwändig redundant auszuführen. Zur Erreichung des in der Prozessindustrie geforderten Sicherheitslevels wird gemäß einer vorteilhaften Ausgestaltung der Erfindung vorgeschlagen, dass die Realwerte Prozesswerte sind, die Komponente ein Peripheriegerät zur Verarbeitung der Prozesswerte ist und der Bus ein Feldbus ist. Gemäß einer weiteren vorteilhaften Ausgestaltung der Erfindung ist die Komponente insbesondere ein Sensor oder ein Aktor.

Um die gewünschte Sicherheitsklasse zu erreichen, ist gemäß einer weiteren vorteilhaften Ausgestaltung der Erfindung die Rechnereinheit entsprechend einem Sicherheitsstandard zertifiziert.

Der möglichst umgehende Einsatz der Komponente wird erleichtert, wenn gemäß einer weiteren vorteilhaften Ausgestaltung der Erfindung die Komponente eine um den sicherheitsgerichteten Kommunikations-Treiber erweiterte betriebsbewährte Komponente ist. Um die teilweise geforderte Betriebsbewährung zu erhalten, ist die Komponente gemäß einer weiteren vorteilhaften Ausgestaltung der Erfindung mit abgeschaltetem sicherheitsgerichteten Datenzusatz und aktivem sicherheitsgerichteten einkanaligen Kommunikations-Treiber zum zumindest zeitweisen Einsatz in nicht sicherheitsrelevanten Applikationen vorgesehen, wobei der sicherheitsgerichtete Datenzusatz freigebbar ist.

Nachfolgend wird die Erfindung anhand der in den Figuren dargestellten Ausführungsbeispiele näher beschrieben und erläutert.

Es zeigen:
- FIG 1: eine zur sicherheitsgerichteten Übertragung von Daten ertüchtigte einkanalige Komponente,
- FIG 2: ein System zur sicherheitsgerichteten Übertragung von Daten und
- FIG 3: eine weitere Komponente zur sicherheitsgerichteten Übertragung von Daten.

Die Erfindung wird anhand des PROFIsafe-Profils erläutert. PROFIsafe ist Profil für den Feldbus-Standard PROFIBUS DP, welches die Sicherheitsanforderungen der IEC 61508 erfüllt. Sowohl sicherheitsgerichtete als auch Standard-Kommunikation sind dabei über ein einziges Kabel möglich. PROFIsafe erweitert PROFIBUS zu einem Sicherheitsbus, welcher die hohen Anforderungen der Prozess- und Fertigungstechnik abdeckt.

Durch das vorgeschlagene System und Verfahren wird die fehlersichere Kommunikation gemäß dem Sicherheitslevel SIL 2 (nach IEC 61508 Teil 3) erreicht. Zusätzlich wird folgendes erreicht:
- Einsatz von betriebsbewährten Sensoren/Aktoren mit PROFIsafe
- Einsatz eines Messumformers (MU), der selbst nicht nach IEC 61508 zertifiziert ist, sondern für den eine Herstellererklärung für "proven in use" nach IEC 61511/NE79 vorliegt
- Der so genannte F-Kommunikationsteil (der sicherheitsgerichtete Kommunikationsteil in PROFIsafe; F = failsafe) kann entsprechend SIL 2 (IEC 61508 Teil 3) zertifiziert werden, siehe NE97 (d.h. "hinreichende Reduzierung der systematischen Fehler auf dem Sensor/Aktor")
- Die Beherrschung der Kommunikationsfehler auf der Kommunikationsstrecke entspricht SIL 2 nach IEC 61508 Teile 1 und 3
- Es kann ein PROFIsafe-Treiber realisiert werden, der parametrierbar für zweikanalige und zusätzlich für "proven in use" Messumformer, d.h. für einkanalige Geräte, einsetzbar ist.

Um den gewünschten Sicherheitslevel des Systems zu erreichen, müssen Sensorik/Aktorik der Feldgeräte sowie die Busankopplung des Feldgerätesignals wie bei konventionell aufgebauten Prozessleittechnik-Schutzeinrichtungen betriebsbewährt sein oder müssen zur hinreichenden Reduzierung systematischer Fehler mindestens den Anforderungen nach SIL 2 genügen, ohne jedoch explizit zertifiziert zu sein. Die oben genannte NE97 schreibt vor, dass zur sicheren Datenübertragung Protokollstacks gemäß IEC 61508 in den Sensoren und Aktoren eingesetzt werden, welche die zuverlässig erzeugten Signale auf den Bus legen. An das Übertragungsmedium selbst (z.B. Busleitungen, Busmaster, Buskoppler) werden keine sicherheitstechnischen Anforderungen gestellt. Das die Sicherheit gewährleistende Protokoll (zusätzlich zu Übertragungsschichten vorhandene Sicherheitsschichten, z.B. PROFIsafe) kann über einen Schalter im Feldgerät wahlweise aktiviert werden. Somit können die Feldgeräte sowohl für sicherheitsrelevante als auch für nicht sicherheitsrelevante Einrichtungen verwendet werden. Sofern ein Gerät sicherheitsrelevant ist, muss z.B. durch eine Verriegelungsfunktion sichergestellt werden, dass die sicherheitsrelevanten Einstellungen nicht verändert werden können. Durch die genannten Maßnahmen wird eine sicherheitsgerichtete Kommunikation zur speicherprogrammierbaren Steuerung (SPS) möglich. Das Bussystem muss im sicherheitsgerichteten Betrieb gewährleisten, dass folgende Fehler innerhalb der Fehlertoleranzzeit erkannt werden und eine bestimmungsgemäße sicherheitsgerichtete Reaktion eingeleitet wird:
- Adressverfälschung
- Wiederholung
- Verlust
- Einfügung
- Falsche Abfolge
- Verfälschung der Information
- Verzögerung.

Gemäß der Erfindung können betriebsbewährte Komponenten, welche mit einem einzigen Mikrocontroller ausgestattet sind, eingesetzt werden und es kann trotzdem ein Sicherheitslevel gemäß SIL 2 nach IEC 61508 - welcher üblicherweise in der Prozessindustrie gefordert ist - erreicht werden. Damit wird insbesondere vermieden, dass Schutzeinrichtungen nur mit zertifizierten Komponenten eingesetzt werden müssen, was üblicherweise eine zusätzliche Ersatzteilhaltung erfordert. Gemäß den Anforderungen der Prozessindustrie können somit die gleichen Komponenten für die Sicherheitstechnik und die restliche Automatisierungstechnik eingesetzt werden. Zusätzlich wird erreicht, dass auch eine Firmware-/Hardware-Änderung zu einer neuen Betriebsbewährung nach IEC 61511/IEC 61508 führt, somit der Sicherheitslevel SIL 2 gewährt wird.

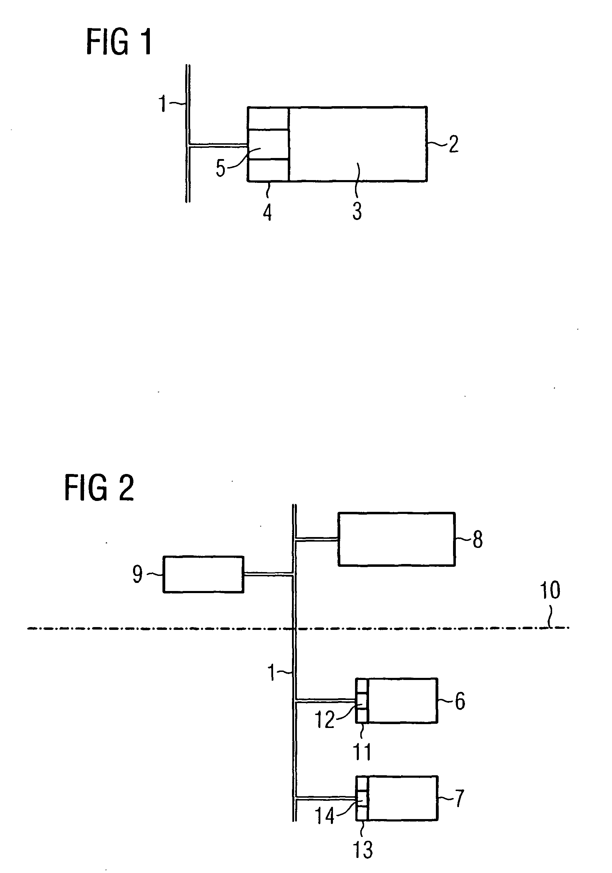

FIG 1 zeigt die Funktionseinheiten einer zur sicherheitsgerichteten Übertragung von Daten ertüchtigten einkanaligen Komponente 2, in diesem Fall ein busfähiges Feldbusgerät. Die Komponente 2 ist über eine Busankopplung 4, welche einen Protokollstack 5 aufweist, an den Bus 1, hier ein Feldbus, angeschlossen. Mit dem Bezugszeichen 3 ist die Sensorik bzw. die Prozessankopplung der Komponente 2 gekennzeichnet.

FIG 2 zeigt ein System zur sicherheitsgerichteten Übertragung von Daten, welches zwei einkanalige Komponenten 6, 7 aufweist, welche zur sicherheitsgerichteten Übertragung von Daten ertüchtigt sind. Die Komponenten 6, 7,gemäß dem Ausführungsbeispiel nach FIG 2 ein Aktor und ein Sensor, sind über den Bus 1, in diesem Fall ein Feldbus, an die sicherheitsgerichtete Rechnereinheit 8, z.B. eine sicherheitsgerichtete speicherprogrammierbare Steuerung, angeschlossen. Die Komponenten 6, 7 weisen jeweils eine Busankopplung 11, 13 mit einem Protokollstack 12, 14 auf. An den Bus 1 ist zusätzlich ein Busmaster 9 angeschlossen. Mit dem Bezugszeichen 10 ist die Grenze zwischen Schaltraum (Busmaster 9 und sicherheitsgerichtete Rechnereinheit 8) und Feld (Komponenten 1, 2) symbolisiert.

Ein Ausführungsbeispiel eines sicheren Kommunikations-Treibers ist ein PROFIsafe-Treiber. Mit einer Zertifizierung des Protokollstacks des PROFIsafe-Treibers entsprechend IEC 61508 Teil 3 wird eine hinreichende Reduzierung der systematischen Fehler gemäß den Anforderungen des Sicherheitslevels SIL 2 erreicht. Dabei deckt der Protokollstack, bei Freiheit von systematischen Fehlern im Protokollstack selbst, Fehler in der Datenübertragung entsprechend den Anforderungen von SIL 2 (IEC 61508 Teil 3) auf. Somit werden durch den einkanaligen PROFIsafe-Treiber sporadische Fehler hinreichend reduziert. Ebenso wie bei einem zweikanaligen PROFIsafe-Treiber wird beim einkanaligen PROFIsafe-Treiber eine hinreichende Aufdeckung von zufälligen Hardware-Fehlern verlangt, welche durch die nachfolgend beschriebenen Maßnahmen erreicht wird.

Gemäß einem Ausführungsbeispiel der Erfindung werden betriebsbewährte Geräte um den PROFIsafe-Treiber erweitert und über einen Feldbus an einen zertifizierten sicherheitsgerichteten Controller angeschlossen. Der PROFIsafe-Treiber weist Funktionen auf, die sicherstellen, dass folgende Übertragungsfehler aufgedeckt werden:
- Telegrammwiederholung
- Telegrammverlust
- Telegrammeinfügung
- Falsche Abfolge der Telegramme
- Verfälschung von Nutzdaten
- Verzögerung von Telegrammen
- Kopplung sicherheitsrelevanter und Standard-Nachrichten
- Adressierfehler (sowohl Doppel- als auch Falsch-Adressierfehler).

Der Treiber entspricht somit SIL 2 gemäß IEC 61508. Vorhandene betriebsbewährte Feldgeräte werden um diesen Treiber ergänzt, was bei ausreichendem Speicherplatz ohne Probleme möglich ist. Das derart ergänzte Feldgerät ist inklusive Buskommunikation somit für SIL 2- oder NAMUR-Anwendungen (siehe NAMUR NE97) geeignet.

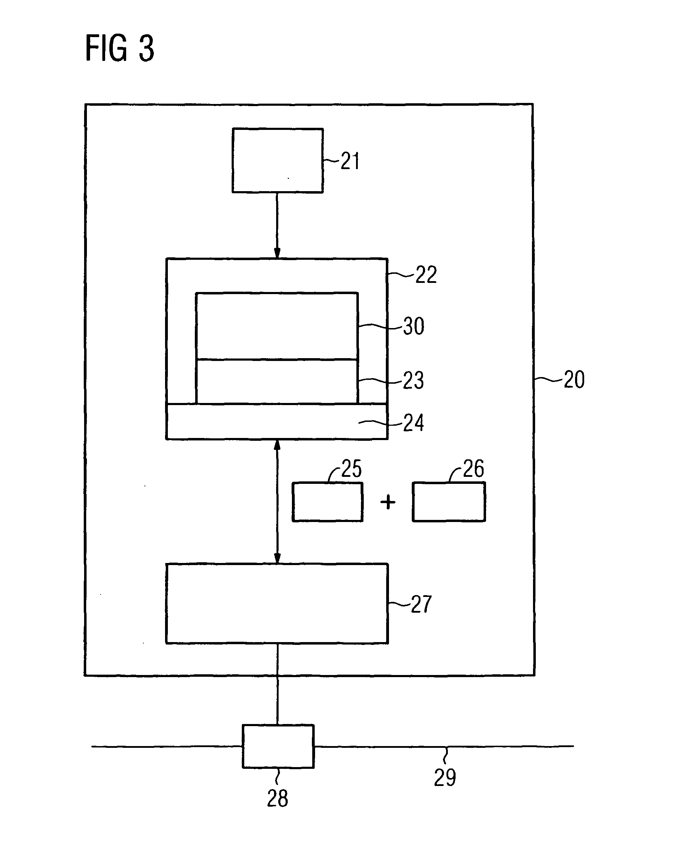

Figur 3 zeigt eine einkanalige Komponente, welche zur sicherheitsgerichteten Übertragung von Daten gemäß SIL 2 (IEC 61508) ertüchtigt ist. Die Komponente 20 ist über einen Busknoten 28 an einen Feldbus 29, z.B. einen Standard-PROFIBUS, angeschlossen. Die Komponente 20 weist einen fehlersicheren Sensor 21, auch F-Sensor genannt (F = failsafe), auf, welcher Daten an einen Mikroprozessor 22 der Komponente 20 überträgt. Der Sensor 21 ist aufgrund von Betriebsbewährung oder entsprechender Entwicklung fehlersicher. Der Sensor 21 kann direkt Bestandteil der Komponente 20 sein oder extern angeordnet - mit der Komponente 20 über eine geeignete Verbindung verbunden - sein. Bisher übliche fehlersichere Feldgeräte weisen einen fehlersicheren Sensor 21 auf, welcher mit Technologie-Firmware 30 auf dem Mikroprozessor 22 gekoppelt ist und in dieser Kombination gemäß SIL 2 zertifiziert ist. Gemäß dem Stand der Technik ist jedoch kein sicherer Busanschluss einer solchen Kombination möglich. Bei dem in Figur 3 dargestellten Ausführungsbeispiel der Erfindung weist der Mikroprozessor 22 zusätzlich einen Kommunikations-Treiber 23 auf, in diesem Fall einen PROFIsafe-Treiber. Der Kommunikations-Treiber 23 dient zur sicherheitsgerichteten Übertragung von Daten 25, welche zusammen mit einem fehlersicheren Anhang 26, dem so genannten F-Anhang, übermittelt werden. Die Übermittlung erfolgt hier mit Hilfe eines DP-Stacks IF (DP = dezentrale Peripherie; IF = Interface) des Mikroprozessors zu einem DP-Stack, einem Protokoll-Stack auf einem PROFIBUS-ASIC 27. Der Protokollstack könnte auch im Mikroprozessor selbst integriert sein.

Die zu beherrschenden Fehler werden durch folgende Maßnahmen aufgedeckt: Die Telegrammwiederholung wird vom so genannten F-Host, z.B. der sicherheitsgerichteten Rechnereinheit, erkannt. Der F-Host kann auch in Form einer sicheren speicherprogrammierbaren Steuerung, in Form eines auf einem Rechner, z. B. einem PC, ablauffähigen sicherheitsgerichteten Programms o. Ä. ausgeführt sein. Ebenso wird durch den F-Host der Telegrammverlust erkannt. Eine Telegrammeinfügung eines anderen Senders wird durch die so genannte F-Adresse erkannt. Die F-Adresse wird parametriert und bei der Inbetriebnahme überprüft. Eine falsche Abfolge der Telegramme (Resequencing) wird im F-Host durch Erwartungshaltung für die laufende Nummer erkannt. Die Verfälschung von Nutzdaten wird ebenfalls vom F-Host erkannt, da der F-Host hinsichtlich der Prüfsumme (z.B. CRC = Cyclic Redundancy Check) eine Erwartungshaltung hat. Falls der eine Prozessor den CRC falsch generiert, passt das Ergebnis zu den falschen Daten nur mit hinreichend kleiner Wahrscheinlichkeit. Die Verzögerung von Telegrammen wird vom F-Host durch Zeitüberwachung erkannt. Die Kopplung von sicherheitsrelevanten und Standard-Nachrichten wird vom F-Host aufgrund der Adresserwartung erkannt. Adressierfehler werden durch die Erwartungshaltung für die laufende Nummer und durch den Quittungscheck im F-Host erkannt. Die meisten Fehler werden somit durch den F-Host erkannt. Für die beschriebenen fehlersicheren Anwendungen ist immer ein F-Host für den Sicherheitsteil vorhanden. Dieser F-Host hat die Eigenschaft, dass er mit der geforderten Qualität die Fehler aufdeckt. Zusätzlich sind die sporadischen Hardware-Fehler, die in der Abarbeitung des PROFIsafe-Treibers auftreten können, zu beherrschen. Dies sind Datenfehler in den gesendeten Prozessdaten, sowie Datenfehler im Statusbit "FV" (= Markierung, ob sichere Ersatzwerte oder Prozesswerte benutzt werden) sowie Fehler im Ablauf des Programms. Um auch diese Fehler innerhalb der Prozessfehlertoleranzzeit (typischerweise 1 Sekunde) aufzudecken, werden folgende Eigenschaften ergänzt:
- Die Prozessdaten werden auch in diversitärer, z. B. in invertierter, Form an den PROFIsafe-Treiber übergeben und dort weitergeführt.
- Im PROFIsafe-Treiber wird auch das Status-Bit "FV" normal und diversitär, insbesondere normal und invers geführt.
- Im PROFIsafe-Treiber wird die Prüfsumme (z. B. CRC) aus einem eigenen unabhängigen Datenfeld generiert.
- eine einkanalige Programmlaufkontrolle wird eingeführt, d.h. alle Synchronisationspunkte werden in eine Programmlaufkontrolle umgewandelt.

Diese Maßnahmen genügen, um aus einem ehemals als zweikanaligen Treiber verwendeten Treiber einen sicheren einkanaligen Treiber für Sensoren zu generieren. Der einkanalige PROFIsafe-Treiber wird ebenfalls nach IEC 61508 Teil 3 zertifiziert. Die Verifikation im PROFIsafe-Gerät gegen systematische Fehler erfolgt erstens durch Betrachtung der Implementierung und zweitens durch einen Conformance Test des F-Protokolls durch ein Zertifizierungs-Institut.

Betriebsbewährung bedeutet nach IEC 61511, den Einsatz eines Gerätes in zehn verschiedenen Applikationen für die Zeit von einem Jahr zu bewerten (siehe IEC 61511 Teil 1, Kapitel 6.7.3.3.3). Dies wird erreicht, indem das Gerät mit implementiertem (und aktivem) PROFIsafe-Treiber, aber abgeschaltetem PROFIsafe-Datenzusatz für ein Jahr in zehn verschiedenen nicht sicherheitsrelevanten Applikationen läuft. Nach diesem Jahr kann dann das Gerät auch für Sicherheitsanwendungen eingesetzt werden. In diesem Fall wird das PROFIsafe-Protokoll benötigt. Es werden hierzu lediglich die PROFIsafe-Daten freigegeben und das Gerät ist mit PROFIsafe-Treiber als betriebsbewährt anzusehen. Der PROFIsafe-Treiber ist somit immer eingeschaltet, umgeschaltet wird nur die Bereitstellung der Daten. Somit läuft der PROFIsafe-Treiber immer mit, womit auch gleiches Zeit- und Datenverhalten für betriebsbewährte Sensoren erreicht wird. Würde man, wie sonst üblich, den PROFIsafe-Treiber nur dann aktivieren, wenn das Gerät für Sicherheitsanwendungen eingesetzt wird, so kann es mit der Aktivierung des PROFIsafe-Treibers die Betriebsbewährung verlieren, da das Gerät dann als geändert gilt. Die alternativ vorhandene Möglichkeit, das Gerät von vorneherein als ein sicherheitsgerichtetes Gerät zu entwickeln, ist als deutlich aufwändiger und langwieriger anzusehen als die hier vorgeschlagene Lösung.

Zusammengefasst betrifft die Erfindung ein System sowie ein Verfahren zur sicherheitsgerichteten Übertragung von Daten, wobei das System mindestens eine Komponente 2, 6, 7 aufweist, welche zur sicherheitsgerichteten Übertragung von Daten ertüchtigt ist. Um die sicherheitsgerichtete Übertragung von Daten mit reduziertem Hardwareaufwand zu ermöglichen, wird erfindungsgemäß vorgeschlagen, dass die einkanalige Komponente 2, 6, 7 zur sicherheitsgerichteten Übertragung von Daten dadurch ertüchtigt ist, dass sie über einen Bus 1 an eine sicherheitsgerichtete Rechnereinheit 8 angeschlossen ist, sie einen Kommunikations-Treiber 23 aufweist, welcher die Daten in normaler und in diversitärer Form führt, der Kommunikations-Treiber 23 einen Markierungswert, welcher anzeigt, ob sichere Ersatzwerte oder Realwerte benutzt werden, in normaler und in diversitärer Form führt, im Kommunikations-Treiber 23 eine Prüfsumme aus den diversitär geführten Daten generiert wird und dass eine Programmlaufkontrolle zur Überwachung des Programmablaufs vorgesehen ist.

## Patentansprüche

1. System zur sicherheitsgerichteten Übertragung von Daten, mit mindestens einer einkanaligen Komponente (2, 6, 7), welche zur sicherheitsgerichteten Übertragung von Daten **dadurch** ertüchtigt ist, dass sie über einen Bus (1) an eine sicherheitsgerichtete Rechnereinheit (8) angeschlossen ist,
**dadurch gekennzeichnet, dass**
• sie einen Kommunikations-Treiber (23) aufweist, welcher die Daten in normaler und in diversitärer Form führt,
• der Kommunikations-Treiber (23) einen Markierungswert, welcher anzeigt, ob sichere Ersatzwerte oder Realwerte benutzt werden, in normaler und in diversitärer Form führt,
• im Kommunikations-Treiber (23) eine Prüfsumme aus den in diversitärer Form geführten Daten generiert wird und dass
• eine Programmlaufkontrolle zur Überwachung des Programmablaufs vorgesehen ist.

2. System nach Anspruch 1,
**dadurch gekennzeichnet,**
**dass** die Realwerte Prozesswerte sind, die Komponente (2, 6, 7) ein Peripheriegerät zur Verarbeitung der Prozesswerte ist und der Bus (1) ein Feldbus ist.

3. System nach Anspruch 1 oder 2,
**dadurch gekennzeichnet,**
**dass** die Rechnereinheit (8) entsprechend einem Sicherheitsstandard zertifiziert ist.

4. System nach einem der vorhergehenden Ansprüche,
**dadurch gekennzeichnet,**
**dass** die Komponente (2, 6, 7) eine um den sicherheitsgerichteten Kommunikations-Treiber (23) erweiterte betriebsbewährte Komponente ist.

5. System nach einem der vorhergehenden Ansprüche,
**dadurch gekennzeichnet,**
**dass** die Komponente (2, 6, 7) mit abgeschaltetem sicherheitsgerichteten Datenzusatz und aktivem sicherheitsgerichteten einkanaligen Kommunikations-Treiber (23) zum zumindest zeitweisen Einsatz in nicht-sicherheitsrelevanten Applikationen vorgesehen ist, wobei der sicherheitsgerichtete Datenzusatz freigebbar ist.

6. System nach einem der vorhergehenden Ansprüche,
**dadurch gekennzeichnet,**
**dass** die Komponente (2, 6, 7) ein Sensor oder ein Aktor ist.

7. Verfahren zur sicherheitsgerichteten Übertragung von Daten, bei welchem mit mindestens einer einkanaligen Komponente (2, 6, 7) Daten sicherheitsgerichtet übertragen werden, wobei die Komponente (2, 6, 7) über einen Bus (1) an eine sicherheitsgerichtete Rechnereinheit (8) angeschlossen wird,
**dadurch gekennzeichnet, dass**
ein Kommunikations-Treiber (23) der Komponente (2, 6, 7) die Daten in normaler und in diversitärer Form führt, wobei der Kommunikations-Treiber (23) einen Markierungswert, welcher anzeigt, ob sichere Ersatzwerte oder Realwerte benutzt werden, in normaler und in diversitärer Form führt, wobei im Kommunikations-Treiber (23) eine Prüfsumme aus den in diversitärer Form geführten Daten generiert wird und wobei der Programmablauf durch eine Programmlaufkontrolle überwacht wird.

8. Verfahren nach Anspruch 7,
**dadurch gekennzeichnet,**
**dass** das Verfahren in der Prozessautomatisierung eingesetzt wird, wobei die Realwerte Prozesswerte sind, die Komponente (2, 6, 7) als Peripheriegerät die Prozesswerte verarbeitet und der Bus (1) ein Feldbus ist.

9. Verfahren nach Anspruch 7 oder 8,
**dadurch gekennzeichnet,**
**dass** die Rechnereinheit (8) entsprechend einem Sicherheitsstandard zertifiziert wird.

10. Verfahren nach einem der Ansprüche 7 bis 9,
**dadurch gekennzeichnet,**
**dass** die Komponente (2, 6, 7) eine um den sicherheitsgerichteten Kommunikations-Treiber (23) erweiterte betriebsbewährte Komponente ist.

11. Verfahren nach einem der Ansprüche 7 bis 10,
**dadurch gekennzeichnet,**
**dass** die Komponente (2, 6, 7) mit abgeschaltetem sicherheitsgerichteten Datenzusatz und aktivem sicherheitsgerichteten einkanaligen Kommunikations-Treiber (23) zumindest zeitweise in nicht-sicherheitsrelevanten Applikationen eingesetzt wird, wobei der sicherheitsgerichtete Datenzusatz nach dieser Zeit freigegeben wird.

12. Verfahren nach einem der Ansprüche 7 bis 11,
**dadurch gekennzeichnet,**
**dass** die Komponente (2, 6, 7) ein Sensor oder ein Aktor ist.

## Claims

1. System for the failsafe transmission of data, with at least one one-channel component (2, 6, 7), which is enhanced for the failsafe transmission of data in that it is connected via a bus (1) to a failsafe computer unit (8),
**characterised in that**
• it has a communication driver (23), which maintains the data in standard and non-standard form,
• the communication driver (23) maintains a marker value, which indicates whether safe replacement values or real values are used, in standard and non-standard form,
• a checksum is generated in the communication driver (23) from the data maintained in non-standard form and
• a program run control is provided to monitor execution of the program.

2. System according to claim 1,
**characterised in that**
the real values are process values, the component (2, 6, 7) is a peripheral device for processing the process values and the bus (1) is a fieldbus.

3. System according to claim 1 or 2,
**characterised in that**
the computer unit (8) is certified to a safety standard.

4. System according to one of the preceding claims,
**characterised in that**
the component (2, 6, 7) is an operationally proven component extended to include the failsafe communication driver (23).

5. System according to one of the preceding claims,
**characterised in that**
the component (2, 6, 7) is provided with a disabled failsafe data supplement and an active failsafe one-channel communication driver (23) for at least intermittent use in applications that are without relevance to safety, it being possible to release the failsafe data supplement.

6. System according to one of the preceding claims,
**characterised in that**
the component (2, 6, 7) is a sensor or an actuator.

7. Method for the failsafe transmission of data, with which data is transmitted in a failsafe manner with at least one one-channel component (2, 6, 7), the component (2, 6, 7) being connected via a bus (1) to a failsafe computer unit (8),
**characterised in that**
a communication driver (23) of the component (2, 6, 7) maintains the data in standard and non-standard form, the communication driver (23) maintains a marker value, which indicates whether safe replacement values or real values are used, in standard and non-standard form, a checksum being generated in the communication driver (23) from the data maintained in non-standard form and execution of the program being monitored by a program run control.

8. Method according to claim 7,
**characterised in that**
the method is used in process automation, the real values being process values, the component (2, 6, 7) processing the process values as a peripheral device and the bus (1) being a fieldbus.

9. Method according to claim 7 or 8,
**characterised in that**
the computer unit (8) is certified to a safety standard.

10. Method according to one of claims 7 to 9,
**characterised in that**
the component (2, 6, 7) is an operationally proven component extended to include the failsafe communication driver (23).

11. Method according to one of claims 7 to 10,
**characterised in that**
the component (2, 6, 7) with a disabled failsafe data supplement and an active failsafe one-channel communication driver (23) is used at least intermittently in applications that are without relevance to safety, the failsafe data supplement being released after this period.

12. Method according to one of claims 7 to 11,
**characterised in that**
the component (2, 6, 7) is a sensor or actuator.

## Revendications

1. Système pour la transmission sécurisée de données, ayant au moins un composant monovoie (2, 6, 7) qui est prévu pour la transmission sécurisée de données du fait qu'il est raccordé par l'intermédiaire d'un bus (1) à un ordinateur sécurisé (8),
**caractérisé par le fait que**
• le composant monovoie comporte un circuit d'attaque de communication (23) qui gère les données sous forme normale et sous forme diversifiée,
• le circuit d'attaque de communication (23) gère une valeur de marquage, qui indique si ce sont des valeurs sécurisées de remplacement ou réelles qui sont utilisées, sous forme normale et sous forme diversifiée,
• dans le circuit d'attaque de communication (23), une somme de test est produite à partir des données gérées sous forme diversifiée, et
• un contrôle d'exécution de programme est prévu pour surveiller l'exécution du programme.

2. Système selon la revendication 1,
**caractérisé par le fait que** les valeurs réelles sont des valeurs de processus, que le composant (2, 6, 7) est un appareil périphérique pour le traitement des valeurs de processus et que le bus (1) est un bus de terrain.

3. Système selon la revendication 1 ou 2,
**caractérisé par le fait que** l'ordinateur (8) est certifié selon un standard de sécurité.

4. Système selon l'une des revendications précédentes,
**caractérisé par le fait que** le composant (2, 6, 7) est un composant au fonctionnement fiable et complété par le circuit d'attaque de communication sécurisé (23).

5. Système selon l'une des revendications précédentes,
**caractérisé par le fait que** le composant (2, 6, 7) est prévu avec un ajout de données sécurisé arrêté et avec un circuit d'attaque de communication monovoie (23) actif pour une utilisation au moins temporaire dans des applications non sécurisées, l'ajout de données sécurisé pouvant être débloqué.

6. Système selon l'une des revendications précédentes,
**caractérisé par le fait que** le composant (2, 6, 7) est un capteur ou un actionneur.

7. Procédé pour la transmission sécurisée de données, dans lequel des données sont transmises de manière sécurisée avec au moins un composant monovoie (2, 6, 7), le composant (2, 6, 7) étant raccordé par l'intermédiaire d'un bus (1) à un ordinateur sécurisé (8),
**caractérisé par le fait qu'**un circuit d'attaque de communication (23) du composant (2, 6, 7) gère les données sous forme normale et sous forme diversifiée, le circuit d'attaque de communication (23) gérant une valeur de marquage, qui indique si ce sont des valeurs sécurisées de remplacement ou réelles qui sont utilisées, sous forme normale et sous forme diversifiée, une somme de test étant produite dans le circuit d'attaque de communication (23) à partir des données gérées sous forme diversifiée et l'exécution du programme étant surveillée par un contrôle d'exécution de programme.

8. Procédé selon la revendication 7,
**caractérisé par le fait que** le procédé est utilisé dans l'automatisation de processus, les valeurs réelles étant des valeurs de processus, le composant (2, 6, 7) en tant qu'appareil périphérique traitant les valeurs de processus et le bus (1) étant un bus de terrain.

9. Procédé selon la revendication 7 ou 8,
**caractérisé par le fait que** l'ordinateur (8) est certifié selon un standard de sécurité.

10. Procédé selon l'une des revendications 7 à 9,
**caractérisé par le fait que** le composant (2, 6, 7) est un composant au fonctionnement fiable et complété par le circuit d'attaque de communication sécurisé (23).

11. Procédé selon l'une des revendications 7 à 10,
**caractérisé par le fait que** le composant (2, 6, 7) est utilisé, avec un ajout de données sécurisé arrêté et avec un circuit d'attaque de communication monovoie (23) actif, au moins temporairement dans des applications non sécurisées, l'ajout de données sécurisé pouvant être débloqué après cet intervalle de temps.

12. Procédé selon l'une des revendications 7 à 11,
**caractérisé par le fait que** le composant (2, 6, 7) est un capteur ou un actionneur.
